Europäisches Patentamt

European Patent Office

Office européen des brevets

(19)

(11) Veröffentlichungsnummer: **0 135 034**

**A2**

(12) **EUROPÄISCHE PATENTANMELDUNG**

(21) Anmeldenummer: **84108535.0**

(22) Anmeldetag: **19.07.84**

(51) Int. Cl.⁴: **G 01 G 17/02**

(30) Priorität: **23.07.83 DE 3326590**

(43) Veröffentlichungstag der Anmeldung:
**27.03.85 Patentblatt 85/13**

(84) Benannte Vertragsstaaten:
**CH DE FR GB IT LI**

(71) Anmelder: **Schubert & Salzer Maschinenfabrik
Aktiengesellschaft
Friedrich-Ebert-Strasse 84
D-8070 Ingolstadt(DE)**

(72) Erfinder: **Studtmann, Rainer, Dipl.-Ing.
Königsberger Strasse 56
D-8070 Ingolstadt(DE)**

(72) Erfinder: **Dämmig, Joachim
Goethestrasse 149
D-8070 Ingolstadt(DE)**

(74) Vertreter: **Canzler, Rolf, Dipl.-Ing.
Schubert & Salzer Maschinenfabrik Aktiengesellschaft
Friedrich-Ebert-Strasse 84
D-8070 Ingolstadt(DE)**

(54) **Vorrichtung zum Wiegen von Fasermaterial.**

(57) Die mit einer Wiegeschale, einer Meßvorrichtung und einer Tariereinrichtung ausgestattete Vorrichtung zum Wiegen von Fasermaterial enthält einen Differenzverstärker (3), an dessen einem mit der Meßvorrichtung (13) verbundenen Eingang vor dem Wiegevorgang eine dem Leergewicht der Wiegeschale proportionale Spannung anliegt. Der andere Eingang des Differenzverstärkers (3) ist an eine Tariereinrichtung angeschlossen, die eine dem Leergewicht der Wiegeschale proportionale Spannung erzeugt und über den gesamten Wiegevorgang speichert. In einer bevorzugten Ausbildung enthält die Tariereinrichtung einen an den anderen Eingang des Differenzverstärkers (3) angeschlossenen Digital-Analog-Wandler (4), dessen Eingang mit dem Ausgang eines Binärzählers (41) verbunden ist. Die Vorrichtung ermöglicht auf einfache Weise ein genaues Austarieren der Wiegevorrichtung vot jedem Wiegevorgang.

*Fig. 2*

## Vorrichtung zum Wiegen von Fasermaterial

Die Erfindung betrifft eine Vorrichtung zum Wiegen von Fasermaterial mit einer Wiegeschale, einer Meßvorrichtung und einer Tariereinrichtung.

Die immer höheren Forderungen an die Mischungsgenauigkeit beim Mischen von Fasermaterial erfordern ein genaues Wiegen der einzelnen Mischungskomponenten, für das Voraussetzung ist, daß vor dem Wiegevorgang die Waagenanzeige genau auf Null eingestellt wird. Dieses Austarieren der Wiegevorrichtung ist notwendig, wenn sich das Leergewicht der Wiegeschale geändert hat, beispielsweise durch Material- und Schmutzablagerungen. Die sofortige Erfassung einer Änderung des Leergewichtes ist nur möglich, wenn die Wiegevorrichtung vor jedem Wiegevorgang austariert wird.

Bei einer bekannten Wiegevorrichtung für Fasermaterial erfolgt das Austarieren von Hand mittels eines Laufgewichtes (DE-OS 2.915.710). Dieses Verfahren ist jedoch wenig effektiv, da es einen erheblichen Zeitaufwand erfordert, insbesondere wenn es vor jedem Wiegevorgang erfolgen soll. Außerdem läßt die Tariergenauigkeit zu wünschen übrig. In der Beschreibung ist zwar darauf hingewiesen, daß das Austarieren auch elektronisch erfolgen kann. Nähere Angaben dazu werden jedoch nicht gemacht.

...

Bei einem Verfahren zum Zuführen von abgewogenen Fasermengen zu einem Fördermittel ist es ferner bekannt, nach einem Wiegevorgang das Gewicht der leeren Wiegeschale zu ermitteln und das dabei von der Gewichtsmeßvorrichtung abgegebene Meßsignal einem Mikroprozessor zu übermitteln, der so programmiert ist, daß er nach dem Abwurf der Fasern aus der Wiegeschale das Leergewicht der Wiegeschale vom Maximalgewicht (Behälter plus Fasern) abzieht und so das tatsächliche Gewicht der von der Wiegeschale auf das Fördermittel abgegebenen Fasern feststellt. Entspricht das tatsächlich abgegebene Fasergewicht nicht einem voreingestellten Sollgewicht, dann erhöht oder verringert der Mikroprozessor die Gewichtseinstellung für den nächsten Wiegevorgang um einen Betrag, der proportional ist der Differenz zwischen dem voreingestellten Gewicht und dem tatsächlich beim vorhergehenden Wiegevorgang ermittelten Fasergewicht (DE-OS 3.233.246). Die Verwendung eines Mikroprozessors bedingt, daß das analoge Meßsignal in einen Digitalwert umgewandelt wird. Das Leergewicht der Wiegeschale kann dabei nur dann mit einer gewünschten sehr hohen Genauigkeit in den Mikroprozessor eingehen, wenn ein Analog-Digital-Wandler mit einer sehr hohen Auflösung verwendet wird. Dadurch wird die Vorrichtung aber sehr kostenaufwendig und teuer.

Aufgabe der Erfindung ist es, eine Vorrichtung zu schaffen, die es auf einfache und kostensparende Weise ermöglicht, die Wiegevorrichtung vor jedem Wiegevorgang genau auszutarieren.

Die Aufgabe wird erfindungsgemäß dadurch gelöst, daß die Wiegevorrichtung einen Differenzverstärker enthält, an dessen einem mit der Meßvorrichtung verbundenen Eingang vor dem Wiegevorgang eine dem Leergewicht der Wiegeschale proportionale Spannung anliegt und dessen anderer Eingang an eine Tariereinrichtung angeschlossen ist, die eine dem Leergewicht der Wiegeschale proportionale Spannung erzeugt und über den gesamten Wiegevorgang speichert.

...

In einer bevorzugten Ausbildung enthält die Tariereinrichtung einen an den anderen Eingang des Differenzverstärkers angeschlossenen Digital-Analog-Wandler, dessen Eingang mit dem Ausgang eines Binärzählers verbunden ist. In Weiterbildung der Erfindung ist dem Digital-Analog- Wandler und dem Binärzähler eine Steuerlogik mit zwei Ausgängen zugeordnet, von denen der eine mit dem Binärzähler und der andere mit einem ersten Eingang eines bistabilen Multivibrators verbunden ist, ferner ein zwischen den bistabilen Multivibrator und den Binärzähler geschalteter Oszillator sowie ein die Ausgangsspannung des Differenzverstärkers mit einer Spannung von Null Volt vergleichender Komparator, dessen Ausgang mit einem zweiten Eingang des bistabilen Multivibrators verbunden ist. Eine noch höhere Tariergenauigkeit wird dadurch erreicht, daß ein eine Referenzspannung liefernder Baustein vorgesehen ist, dessen Ausgangsspannung mit der Ausgangsspannung des Digital-Analog-Wandlers addiert wird.

Ein Ausführungsbeispiel wird nachstehend anhand der Zeichnungen näher erläutert. Es zeigen:

Figur 1   eine Wiegevorrichtung mit Wiegeschale in Seitenansicht;

Figur 2   ein Blockschaltbild der erfindungsgemäßen Vorrichtung.

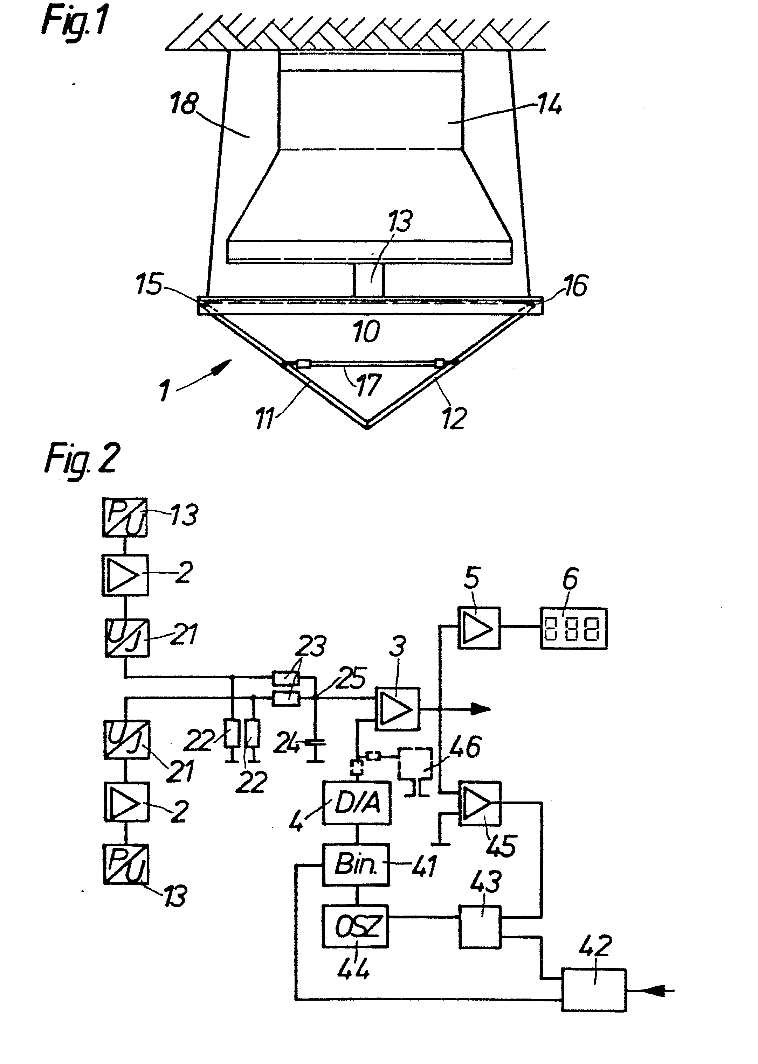

Gemäß Figur 1 dient als Wiegevorrichtung eine aus zwei Seitenwänden 10 und zwei Klappen 11 und 12 gebildete Wiegeschale 1, die unter Zwischenschaltung einer Meßvorrichtung 13 an einem gestellfesten Träger 14 hängt. Eine zweite Meßvorrich-

...

tung ist in analoger Weise auf der anderen Seite der Wiegeschale 1 vorhanden. Als Meßvorrichtung 13 werden zweckmäßig
Dehnungsmeßstreifen vorgesehen. Die um Achsen 15 und 16
schwenkbaren Klappen 11 und 12 können in bekannter Weise
pneumatisch durch einen Druckluftzylinder 17 geöffnet und
geschlossen werden. Das Fasermaterial wird durch einen gestellfesten Trichter 18 hindurch in die Wiegeschale 1 befördert.

Jede der beiden Meßvorrichtungen 13 ist mit einem Vorverstärker 2 verbunden, an den jeweils ein Spannungs-Strom-
Wandler 21 angeschlossen ist (Figur 2). Dem letzteren nachgeordnet ist ein Widerstand 22 zur Strom-Spannungs-Wandlung und ein Tiefpaß, der aus Widerständen 23 und einem
Kondensator 24 besteht. In einem Additionspunkt 25 werden
dann die Meßsignale der beiden Meßvorrichtungen 13 addiert.

Der Additionspunkt 25 ist mit einem ersten Eingang eines
Differenzverstärkers 3 verbunden. An den zweiten Eingang
des Differenzverstärkers 3 ist eine Tariereinrichtung angeschlossen, die, wie noch beschrieben wird, eine dem Leergewicht der Wiegeschale proportionale Spannung erzeugt und
während des gesamten Wiegevorganges speichert. In der gezeigten und bevorzugten Ausführung enthält die Tariereinrichtung
einen an den zweiten Eingang des Differenzverstärkers 3
angeschlossenen Digital-Analog-Wandler 4, dem ein Binärzähler
41 vorgeschaltet ist. Dem Digital-Analog-Wandler 4 und dem
Binärzähler 41 ist eine Steuerlogik 42 mit zwei Ausgängen
zugeordnet, von denen der eine mit dem Binärzähler 41 und der
andere mit einem ersten Eingang eines bistabilen Multivibrators 43 in Form eines R/S-Flip-Flop verbunden ist. Zwischen

...

den bistabilen Multivibrator 43 und den Binärzähler 41 ist ein Oszillator 44, im vorliegenden Fall ein 20 kHz-Oszillator, geschaltet. Dem Ausgang des Differenzverstärkers 3 ist ein Komparator 45 nachgeschaltet, dessen Ausgangsleitung zum zweiten Eingang des bistabilen Multivibrators 43 führt.

Die Funktionsweise der Vorrichtung ist folgende: Vor Beginn der Austarierung der Wiegevorrichtung werden zunächst die Klappen 11 und 12 der Wiegeschale 1 geöffnet, um sicherzustellen, daß sich kein Fasermaterial mehr in der Wiegeschale 1 befindet, und anschließend wieder geschlossen. Das Öffnen und Schließen der Klappen 11 und 12 wird von einer nicht gezeigten Steuervorrichtung ausgelöst. Die beiden Meßvorrichtungen 13 geben ein dem Leergewicht der Wiegeschale 1 entsprechendes Meßsignal ab, das nach einer Verstärkung im Vorverstärker 2 den Spannungs-Strom-Wandler 21 passiert, dann durch den Widerstand 22 einer Strom-Spannungs-Wandlung unterworfen und dem aus dem Widerstand 23 und dem Kondensator 24 bestehenden Tiefpaß zugeführt wird. Dabei werden die beiden Meßsignale im Additionspunkt 25 addiert. Das aus der Addition gewonnene Signal wird dem einen (negativen) Eingang des Differenzverstärkers 2 zugeführt, an dem somit eine dem Leergewicht der Wiegeschale 1 proportionale Spannung anliegt.

Mit dem Steuerbefehl zum Schließen der Klappen 11 und 12 gibt die oben genannte Steuervorrichtung auch einen Impuls an die Steuerlogik 42 ab, die daraufhin den Binärzähler 41 auf Null stellt und den bistabilen Multivibrator 43 (R/S-Flip-Flop) setzt. Der letztere hebt die Sperre des Oszillators

...

44 auf, so daß dieser den Binärzähler 41 hochzählt. Der digitale Wert des Binärzähler 41 wird im Digital-Analog-Wandler 4 in ein analoges Signal umgewandelt und dieses dem mit dem Digital-Analog-Wandler 4 verbunden zweiten (positiven) Eingang des Differenzverstärkers 3 zugeführt.

Die Ausgangsspannung am Differenzverstärker 3 wird durch den Komparator 45 mit einer Spannung von Null Volt verglichen. Bei Übereinstimmung der Spannung am Ausgang des Differenzverstärkers 3 mit der Spannung von Null Volt kippt der Komparator 45 und setzt den bistabilen Multivibrator 43 zurück. Dies hat zur Folge, daß der Oszillator 44 stehenbleibt und der ihm nachgeschaltete Binärzähler 41 seinen momentanen Wert behält. Somit ist die Spannungsdifferenz am Ausgang des Differenzverstärkers 3 gleich Null und die Wiegevorrichtung ist austariert.

Die aus dem letzten Wert des Binärzählers 41 im Digital-Analog-Wandler 4 gewonnene, dem Leergewicht der Wiegeschale 1 proportionale Spannung wird über den gesamten Wiegevorgang im Digital-Analog-Wandler 4 gespeichert. Die beschriebene Nulltarierung wiederholt sich vor jedem Wiegevorgang, so daß eine Veränderung des Leergewichtes der Wiegeschale durch Ablagerungen oder andere Fremdeinflüsse sofort erkannt und berücksichtigt werden kann.

Das Ausgangssignal des Differenzverstärkers 3 wird verschiedenen Komparatoren (nicht gezeigt) zugeführt, die die Materialzufuhr in die Wiegeschale steuern und beenden. Zusätzlich kann das Ausgangssignal über eine Treiberstufe 5 einem Digital-Voltmeter 6 zur Anzeige des Materialgewichtes zugeführt werden.

...

Die Tariergenauigkeit kann noch erhöht werden, wenn man den vom Digital-Analog-Wandler 4 gelieferten Analogwert um einen vorbestimmten Faktor spreizt. Hierzu wird in Weiterbildung der Vorrichtung ein Baustein 46 vorgesehen, der eine einem Teil des Leergewichtes der Wiegeschale 1 proportionale Referenzspannung liefert. Die Referenzspannung wird mit der Ausgangsspannung des Digital-Analog-Wandlers 4 addiert und die aus der Addition genommene Spannung dem zweiten Eingang des Differenzverstärkers 3 zugeführt. Dieses Spreizen kann vorgesehen werden, wenn das Leergewicht der Wiegeschale größer ist als das Gewicht der zu wiegenden Fasermenge.

Die beschriebene Ausbildung der Tariereinrichtung wird bevorzugt, jedoch liegen Abwandlungen im Wissen und Können des Fachmannes. So kann beispielsweise anstelle des Digital-Analog-Wandlers 4 und des ihm vorgeschalteten Binärzählers 41 und Oszillators 44 zur Erzeugung und Speicherung einer dem Leergewicht der Wiegeschale proportionalen Spannung ein Kondensator mit schaltbarer Stromquelle verwendet werden.

SCHUBERT & SALZER
Maschinenfabrik Aktiengesellschaft

P + Gm 83/687

P a t e n t a n s p r ü c h e

1. Vorrichtung zum Wiegen von Fasermaterial mit einer das Fasermaterial aufnehmenden Wiegeschale, einer Meßvorrichtung und einer Tariereinrichtung, d a d u r c h g e k e n n z e i c h n e t , daß die Wiegevorrichtung einen Differenzverstärker (3) enthält, an dessen einem mit der Meßvorrichtung (13) verbundenen Eingang vor dem Wiegevorgang eine dem Leergewicht der Wiegeschale (1) proportionale Spannung anliegt und dessen anderer Eingang an eine Tariereinrichtung angeschlossen ist, die eine dem Leergewicht der Wiegeschale proportionale Spannung erzeugt und über den gesamten Wiegevorgang speichert.

2. Vorrichtung nach Anspruch 1, d a d u r c h g e - k e n n z e i c h n e t , daß die Tariereinrichtung einen an den anderen Eingang des Differenzverstärkers (3) angeschlossenen Digital-Analog-Wandler (4) enthält, dessen Eingang mit dem Ausgang eines Binärzählers (41) verbunden ist.

...

- 2 -

0135034

3. Vorrichtung nach Anspruch 2, d a d u r c h  g e -
k e n n z e i c h n e t ,  daß dem Digital-Analog-Wandler (4) und dem Binärzähler (41) eine Steuerlogik (42)
mit zwei Ausgängen zugeordnet ist, von denen der eine
mit dem Binärzähler (41) und der andere mit einem ersten
Eingang eines bistabilen Multivibrators (43) verbunden
ist, ferner ein zwischen den bistabilen Multivibrator (43)
und den Binärzähler (41) geschalteter Oszillator (44)
sowie ein die Ausgangsspannung des Differenzverstärkers
(3) mit einer Spannung von Null Volt vergleichender Komparator (45) dessen Ausgang mit einem zweiten Eingang
des bistabilen Multivibrators (43) verbunden ist.

4. Vorrichtung nach Anspruch 3, d a d u r c h  g e -
k e n n z e i c h n e t ,  daß ferner ein eine Referenzspannung liefernder Baustein (46) vorgesehen ist, dessen
Ausgangsspannung mit der Ausgangsspannung des Digital-
Analog-Wandlers (4) addiert wird.

SCHUBERT & SALZER
Maschinenfabrik Aktiengesellschaft
0135034

## Fig. 1

## Fig. 2